# EUROPÄISCHE PATENTSCHRIFT

(11) **EP 2 759 033 B1**
(45) Veröffentlichungstag und Bekanntmachung des Hinweises auf die Patenterteilung: **05.04.2017**
(21) Anmeldenummer: 12778632.5
(22) Anmeldetag: 18.09.2012
(51) Int. Cl.: H02J 3/32, H02J 3/38

(54) **BEREITSTELLUNG VON REGELLEISTUNG MIT EINER PHOTOVOLTAIKANLAGE**
PROVISION OF CONTROL POWER WITH A PHOTOVOLTAIC ARRANGEMENT
MISE AU POINT D'UNE PUISSANCE DE RÉGLAGE AVEC UNE INSTALLATION PHOTOVOLTAÏQUE

(30) Priorität: 20.09.2011 DE 102011053789; 31.10.2011 DE 102011054971
(43) Veröffentlichungstag der Anmeldung: 30.07.2014
(73) Patentinhaber: SMA Solar Technology AG, 34266 Niestetal (DE)
(72) Erfinder: BLANZ, Jonathan, 29221 Celle (DE); WACHENFELD, Volker, 34369 Hofgeismar (DE); FRIEBE, Jens, 34246 Vellmar (DE); STEVENS, Stijn, 34355 Escherode (DE)
(86) Internationale Anmeldenummer: PCT/EP2012/068371
(87) Internationale Veröffentlichungsnummer: WO 2013/041534

(56) Entgegenhaltungen:
- EP-A1- 2 328 259
- EP-A2- 2 362 521
- WO-A1-2011/111475
- DE-A1-102006 030 751
- US-A1- 2003 047 209
- US-A1- 2010 008 119
- US-A1- 2011 221 276
- VENKATA AJAY KUMAR PAPPU ET AL: "Implementing frequency regulation capability in a solar photovoltaic power plant", NORTH AMERICAN POWER SYMPOSIUM (NAPS), 2010, IEEE, PISCATAWAY, NJ, USA, 26. September 2010 (2010-09-26), Seiten 1-6, XP031787699, ISBN: 978-1-4244-8046-3

## Beschreibung

### TECHNISCHES GEBIET DER ERFINDUNG

Die Erfindung bezieht sich auf ein Verfahren zum Steuern einer an ein Wechselstromnetz angeschlossenen Photovoltaikanlage mit einem Photovoltaikgenerator und mit einem Wechselrichter, das die Merkmale des Oberbegriffs des unabhängigen Patentanspruchs 1 aufweist. Weiterhin betrifft die Erfindung einen Wechselrichter zur Einspeisung elektrischer Energie von einem Photovoltaikgenerator in ein Wechselstromnetz mit einer Steuerung, die ein solches Verfahren umsetzt.

### STAND DER TECHNIK

Ein Verfahren zum Steuern einer an ein Wechselstromnetz angeschlossenen Photovoltaikanlage mit einem Photovoltaikgenerator und mit einem Wechselrichter, wobei ein Leistungsregelsignal empfangen und wobei mit dem Wechselrichter in Abhängigkeit von dem Leistungsregelsignal elektrische Leistung zwischen dem Photovoltaikgenerator und dem Wechselstromnetz transferiert wird, und ein Wechselrichter mit einer Steuerung zur Umsetzung eines solchen Verfahrens sind unter anderem aus der EP 2 337 179 A1 bekannt. Während im Normalfall mit dem Wechselrichter einer Photovoltaikanlage die maximale elektrische Leistung des angeschlossenen Photovoltaikgenerators in ein angeschlossenes Wechselstromnetz eingespeist wird, wird diese Einspeiseleistung infolge eines von dem Netzbetreiber des Wechselstromnetzes übermittelten Rundsteuersignals zum Beispiel auf einen vorgegebenen Prozentsatz der Nennleistung der Photovoltaikgeneratoren reduziert. Auf diese Weise kann der Netzbetreiber ein destabilisierendes Überangebot an elektrischer Leistung in dem Wechselstromnetz reduzieren. In den Fällen einer derart zwangsweise reduzierten Einspeiseleistung steht dem Netzbetreiber der jeweiligen Photovoltaikanlage eine Vergütung auch für die potentiell möglich gewesene, aber tatsächlich nicht eingespeiste Einspeiseleistung zu, so dass diese zusätzlich zu erfassen ist.

Zum dezentralen Steuern von an ein Wechselstromnetz angeschlossenen Generatoren ist es grundsätzlich bekannt, deren Einspeiseleistung in Abhängigkeit von der Netzfrequenz des Wechselstromnetzes, d. h. von der Frequenz der Wechselspannung, die in dem Wechselstromnetz vorliegt, zu steuern. Mit fallendem Angebot an elektrischer Leistung in dem Wechselstromnetz sinkt die Netzfrequenz entsprechend der unter Überlast reduzierten Drehzahl einer elektrischen Maschine als Generator ab.

Es ist bekannt, dass Photovoltaikanlagen, die an sich zum Einspeisen von elektrischer Energie in ein Wechselstromnetz vorgesehen sind, aus einem angeschlossenen Wechselstromnetz auch Energie entnehmen können, wenn keine oder nur unzureichende elektrische Leistung von ihrem Photovoltaikgenerator zur Verfügung steht, um beispielsweise ein Bordnetz zu speisen, aus dem heraus die Steuerung ihres Wechselrichters versorgt wird.

Aus der DE 10 2006 030 751 A1 ist es bekannt, die Energieflussrichtung von einem Photovoltaikgenerator in ein Wechselstromnetz umzukehren, um Schnee oder Eis von seinen Photovoltaikmodulen, die den Photovoltaikgenerator in seiner Funktion beeinträchtigen, abzuschmelzen. Hiermit wird auch verhindert, dass sich auf den Photovoltaikmodulen bzw. einem Dach, auf dem die Photovoltaikmodule montiert sind, hohe Schneelasten auftürmen.

Die von einer Photovoltaikanlage bereitgestellte elektrische Leistung weist unter Umständen eine nicht unerhebliche Schwankung auf. Wenn zum Beispiel in der Mittagszeit einzelne Wolken ziehen, kann die elektrische Leistung schnell zwischen ihrem Maximalwert und einem diesem gegenüber um mehrere 10 Prozent reduzierten Wert variieren. Um die resultierenden Schwankungen des Angebots von elektrischer Leistung in einem Wechselstromnetz, in das die Photovoltaikanlage einspeist, zu begrenzen, wird diskutiert, die Maximalleistung eines Wechselrichters einer Photovoltaikanlage auf z. B. 70 % der Maximalleistung aller angeschlossenen Photovoltaikgeneratoren zu begrenzen. Auf diese Weise würden Leistungsspitzen der Photovoltaikgeneratoren nicht mehr bis zu dem Wechselstromnetz gelangen. Man spricht in diesem Zusammenhang auch von einem "Peak Shaving". Allerdings geht die in diesen nicht eingespeisten Leistungsspitzen enthaltene elektrische Energie verloren.

Weiterhin ist es bekannt, Regelleistung für ein Wechselstromnetz mit Hilfe einer Batterie, die als Zwischenspeicher für elektrische Leistung dient, und eines die Batterie bidirektional an das Wechselstromnetz anbindenden Batterieinverters bereitzustellen. Dabei sollte jedoch die Batterie niemals vollständig sondern immer nur etwa zur Hälfte aufgeladen werden, um im Bedarfsfall sowohl elektrische Leistung in das Wechselstromnetz abgeben als auch aus diesem aufnehmen zu können. Entsprechend muss die Speicherkapazität der Batterie verglichen mit der realisierten Regelleistung sehr groß gewählt werden, insbesondere, wenn die Regelleistung über einen längeren Zeitraum bereit gestellt werden muss.

Aus der EP 2 328 259 A1 ist ein Verfahren mit den Merkmalen des Oberbegriffs des unabhängigen Patentanspruchs 1 bekannt. Ein solches Verfahren geht auch aus der EP 2 362 521 A2 hervor. Indem in Abhängigkeit von einem Leistungsregelsignal die von dem Wechselrichter in das Wechselstromnetz transferierte elektrische Leistung zur Stabilisierung des Wechselstromnetzes erhöht und erniedrigt wird, wird positive und negative Regelleistung bereitgestellt.

### AUFGABE DER ERFINDUNG

Der Erfindung liegt die Aufgabe zugrunde, ein Verfahren zum Steuern einer Photovoltaikanlage und einen Wechselrichter mit einer Steuerung zum Umsetzen eines solchen Verfahrens aufzuzeigen, die die Funktionalität einer Photovoltaikanlage erhöhen und damit die Verdienstmöglichkeiten des Betreibers der Photovoltaikanlage verbessern und die einen aktiven Beitrag zur Netzstützung leisten.

### LÖSUNG

Die Aufgabe der Erfindung wird durch ein Verfahren mit den Merkmalen des unabhängigen Patentanspruchs 1 gelöst. Die abhängigen Patentansprüche 2 bis 10 sind auf bevorzugte Ausführungsformen des erfindungsgemäßen Verfahrens gerichtet. Der Patentanspruch 11 betrifft einen Wechselrichter mit einer Steuerung zur Umsetzung des erfindungsgemäßen Verfahrens. Die Patentansprüche 12 bis 15 sind auf bevorzugte Ausführungsformen dieses Wechselrichters gerichtet.

### BESCHREIBUNG DER ERFINDUNG

Bei dem neuen Verfahren zum Steuern einer an ein Wechselstromnetz angeschlossenen Photovoltaikanlage mit einem Photovoltaikgenerator und einem Wechselrichter, wobei ein Leistungsregelsignal empfangen wird und wobei mit dem Wechselrichter in Abhängigkeit von dem Leistungsregelsignal elektrische Leistung zwischen dem Photovoltaikgenerator und dem Wechselstromnetz transferiert wird, umfasst die in Abhängigkeit von dem Leistungsregelsignal zwischen dem Photovoltaikgenerator und dem Wechselstromnetz transferierte elektrische Leistung negative und positive dynamische Regelleistung.

Hierbei bezeichnet der Begriff Regelleistung einen Leistungsanteil, der eine Abweichung der eingespeisten Gesamtleistung von einer Grundleistung darstellt, wobei die Grundleistung diejenige Leistung ist, die die Photovoltaikanlage bei einem Leistungsregelsignal von null bzw. bei fehlendem Leistungsregelsignal (d. h. ungeregelter Einspeisung) einspeist. Positive Regelleistung bezeichnet demzufolge denjenigen Leistungsanteil der vom Wechselrichter in das Wechselstromnetz eingespeisten Gesamtleistung, der zusätzlich zur Grundleistung aufgrund des vom Netzbetreiber bereitgestellten Leistungsregelsignals in das Wechselstromnetz eingespeist wird. Negative Regelleistung bezeichnet entsprechend den gegenüber der Grundleistung reduzierten Leistungsanteil, der auch im Betrag größer als die Grundleistung sein kann, wobei die Photovoltaikanlage dann Leistung aus dem Netz entnimmt.

Mit dynamischer Regelleistung wird hier Regelleistung bezeichnet, die innerhalb kurzer Zeit von maximal wenigen Sekunden wirksam regelbar ist. Insbesondere ist derartige dynamische Regelleistung binnen maximal 3 Sekunden wirksam regelbar, bevorzugt binnen maximal 1 Sekunde und noch mehr bevorzugt binnen maximal einer halben Sekunde.

Auf diese Weise wird mit der Photovoltaikanlage Regelleistung für das Wechselstromnetz bereitgestellt, die über ein Abregeln der in das Wechselstromnetz eingespeisten elektrischen Leistung weit hinaus geht. Insbesondere kann die mit einer Photovoltaikanlage bereitgestellte elektrische Leistung durch unterschiedliche Ansteuerung ihres Wechselrichters in großen Bereichen hoch dynamisch variiert werden, so dass die erfindungsgemäß bereitgestellte positive und negative Regelleistung dynamische Regelleistung ist und zur dynamischen Stabilisierung des Wechselstromnetzes verwendet werden kann. Hierdurch ist die mit der Photovoltaikanlage bereitgestellte Regelleistung besonders wertvoll und hat entsprechend guten Chancen auf eine hohe Vergütung. Die Spannweite der Vergütung von Regelleistung ist sehr groß, wobei selbst die Vergütung von negativer Regelleistung an die Vergütung von Einspeiseleistung heranreicht und diese sogar überschreiten kann. Die Bereitstellung von Regelleistung mit einer Photovoltaikanlage eröffnet ihrem Betreiber damit eine erhebliche zusätzliche Einnahmemöglichkeit.

Die Fähigkeit zur unterschiedlichen Ansteuerung eines Wechselrichters mit der Folge unterschiedlicher abgegebener Leistung ist ein inhärentes Merkmal vieler kommerziell verfügbarer Wechselrichter, so dass für die Umsetzung des erfindungsgemäßen Verfahrens an dieser Stelle kein besonderer Aufwand betrieben werden muss. Die bei der erfindungsgemäßen Bereitstellung von Regelleistung typischer Weise problemlos realisierbare Zeitkonstante liegt bei weniger als 0,1 s.

Ausgehend von einer elektrischen Leistung, die von der Photovoltaikanlage bei einer Regelleistung von null in das angeschlossene Wechselstromnetz eingespeist wird, beschränkt sich die erfindungsgemäße Bereitstellung von negativer Regelleistung nicht auf eine Variation dieser elektrischen Leistung im positiven Bereich. Das erfindungsgemäße Bereitstellen von positiver und negativer Regelleistung umfasst auch, dass elektrische Leistung in Abhängigkeit von dem Leistungsregelsignal in beiden Richtungen zwischen dem Wechselrichter und dem Wechselstromnetz transferiert wird. Das bedeutet, dass die Photovoltaikanlage bei der Bereitstellung negativer Regelleistung dem Wechselstromnetz gezielt elektrische Leistung entnimmt.

Zu diesem Zweck wird mit dem Wechselrichter die elektrische Leistung in Abhängigkeit von dem Leistungsregelsignal in beiden Richtungen zwischen dem Photovoltaikgenerator und dem Wechselstromnetz transferiert. So wird bei Bedarf elektrische Leistung aus dem Wechselstromnetz in den Photovoltaikgenerator abgeführt und dort in Wärme umgesetzt. Dass dies grundsätzlich möglich ist, ist aus der eingangs zitierten DE 10 2006 030 751 A1 und entsprechenden Veröffentlichungen bekannt. Neu ist jedoch, von dieser Möglichkeit zur Stabilisierung eines Wechselstromnetzes Gebrauch zu machen. Dabei stellt sich heraus, dass Wechselrichter aktueller Photovoltaikanlagen nicht nur die Größe der transferierten elektrischen Leistung sondern auch die Richtung des Leistungsflusses zwischen dem Photovoltaikgenerator und dem Wechselstromnetz sehr schnell ändern können, was für die dynamische Stabilisierung des Wechselstromnetzes äußerst vorteilhaft ist. Die Möglichkeit zur Bereitstellung wertvoller negativer Regelleistung mit einem Photovoltaikgenerator war für den Fachmann aus den Veröffentlichungen, die sich mit dem Abtauen von Photovoltaikmodulen eines Photovoltaikgenerators durch Aufnahme elektrischer Leistung aus einem angeschlossenen Wechselstromnetz beschäftigen, nicht abzusehen. Dort werden ausschließlich die Kosten für dieses Abtauen mit der dadurch ermöglichten zusätzlichen Einspeiseleistung des abgetauten Photovoltaikgenerators und der Entlastung eines Dachs, auf dem die Photovoltaikmodule montiert sind, verglichen.

Um die Grundlage für die erfindungsgemäße Bereitstellung positiver Regelleistung zu schaffen, kann der Photovoltaikgenerator bei Regelleistung von null in einem Arbeitspunkt betrieben werden, in dem er eine gegenüber seinem MPP reduzierte elektrische Leistung abgibt. Der Bereich der Leistung bis zum MPP, dem Arbeitspunkt mit maximaler Leistung steht dann als positive Regelleistung zur Verfügung. Konkret kann die reduzierte elektrische Leistung um einen vorgegebenen absoluten Betrag oder einen vorgegebenen prozentualen Anteil gegenüber der elektrischen Leistung am MPP reduziert sein. In aller Regel beträgt die reduzierte elektrische Leistung nicht mehr als 70 % der elektrischen Leistung am MPP. Vorzugsweise beträgt sie nicht mehr als 50 %, noch mehr bevorzugt nicht mehr als 30 % der elektrischen Leistung am MPP. Auch eine Reduzierung der Leistung am Arbeitspunkt auf null Prozent der elektrischen Leistung am MPP ist möglich, um die gesamte potentielle elektrische Leistung des Photovoltaikgenerators als positive Regelleistung vorzuhalten. Sowohl der absolute Betrag als auch die prozentuale Reduzierung können mit dem Netzbetreiber, zum Beispiel als Funktion eines Netzzustandes oder mit Hilfe eines von einer externen Vorrichtung übermittelten Wertes bestimmt werden. Allgemein kann die reduzierte elektrische Leistung mathematisch aus der verfügbaren Generatorleistung und/oder der maximalen Wechselrichterleistung und/oder der maximaler Generatorleistung und bei Bedarf zusätzlich aus elektrischen Größen des Netzes bestimmt werden.

Es ist möglich, die Reduzierung der Leistung nur dann durchzuführen, wenn die eingespeiste Leistung einen Schwellwert überschreitet, so dass bei Einspeiseleistungen unterhalb des Schwellwertes die MPP-Leistung eingespeist wird und entsprechend lediglich negative Regelleistung bereitgestellt wird.

Vorzugsweise ist der Arbeitspunkt bei einer Regelleistung von null derart gegenüber dem MPP verschoben, dass eine Erhöhung der aus einem Gleichspannungszwischenkreis des Wechselrichters eingespeisten Leistung den Arbeitspunkt des daran angeschlossenen Photovoltaikgenerators automatisch in Richtung des MPP verschiebt. Dies ist der Fall, wenn die Generatorspannung in dem Arbeitspunkt mit reduzierter elektrischer Leistung höher als die MPP-Spannung gewählt wird. Hierdurch ist die gewünschte Regelleistung bei Anliegen eines entsprechenden Leistungsregelsignals schnellstmöglich und mit geringem Steuerungsaufwand innerhalb des Wechselrichters verfügbar.

In besonders bevorzugten Ausführungsformen des erfindungsgemäßen Verfahrens wird die elektrische Leistung in Abhängigkeit von dem Leistungsregelsignal zusätzlich auch von und zu einem Zwischenspeicher für elektrische Leistung transferiert. Hierbei handelt es sich typischerweise um eine geeignete Batterie, in aller Regel einen Akkumulator, beispielsweise in Form einer Lithiumionenbatterie. Grundsätzlich kann der Zwischenspeicher für elektrische Leistung aber auch nach dem Kondensatorprinzip arbeiten und beispielsweise sogenannte Supercaps aufweisen. Ebenso ist es möglich, den Zwischenspeicher mit Hilfe eines Hydrolyseurs und einer Brennstoffzelle auszubilden, bei denen es sich auch um dasselbe in unterschiedlichen Modi betriebene Bauteil handeln kann. Natürlich sind auch konventionelle Zwischenspeicher, wie z. B. ein Schwungrad denkbar. Mit Hilfe der Batterie wird es möglich, dauerhaft, zum Beispiel auch des Nachts, positive Regelleistung bereitzustellen. Dabei ist es von Vorteil, dass die Batterie zwar mit Hilfe negativer Regelleistung aufgeladen werden kann, in der Batterie aber kein Speichervolumen für die Aufnahme weiterer elektrischer Leistung freigehalten werden muss, weil hierfür bei dem erfindungsgemäßen Verfahren der Photovoltaikgenerator zur Verfügung steht. Indem die Batterie also voll aufgeladen werden kann, steht des Nachts, wenn der Photovoltaikgenerator keine elektrische Leistung bereitstellen stellen kann, die ganze Batterieladung als positive Regelleistung und die ganze Leistungsaufnahmefähigkeit des Photovoltaikgenerators als negative Regelleistung zur Verfügung. Entsprechend kann die Batterie verglichen mit einer Batterie, die nach dem Stand der Technik auch negative Regelleistung aufzunehmen hat, deutlich kleiner und damit kostengünstiger ausfallen. Zudem kann das Aufladen der Batterie stärker unter dem Gesichtspunkt einer langen Lebensdauer der Batterie erfolgen. Insbesondere kann das Aufladen der Batterie bei dem erfindungsgemäßen Verfahren mit elektrischer Energie von dem Photovoltaikgenerator erfolgen, die bei vorgehaltener, aber nicht in Anspruch genommener positiver Regelleistung überschüssig ist.

Weiterhin kann bei dem erfindungsgemäßen Verfahren der Arbeitspunkt des Photovoltaikgenerators, in dem er bei Regelleistung von null betrieben wird, in Abhängigkeit von dem Ladezustand der Batterie festgelegt werden. Je höher der Ladezustand ist, desto weniger muss für die positive Regelleistung auf den Photovoltaikgenerator zurückgegriffen werden, weil die Batterie zur Verfügung steht. Damit kann mehr von der potentiell verfügbaren elektrischen Leistung genutzt werden. Praktisch kann der Photovoltaikgenerator also immer nahe seinem MPP betrieben werden. Dabei wird zunächst nur ein Teil der generierten elektrischen Leistung in das Wechselstromnetz eingespeist; mit dem Rest wird die Batterie geladen. Mit steigendem Ladezustand der Batterie wird der in das Wechselstromnetz eingespeiste Teil der generierten elektrischen Energie erhöht. Dabei kann die Batterie nicht nur die zusätzliche positive Regelleistung bereitstellen, sondern auch Schwankungen der elektrischen Leistung von dem Photovoltaikgenerator ausgleichen, d. h. puffern. Zu diesem Zweck kann es sinnvoll sein, die Batterie in mehrere Teile aufzuteilen, die einen Teil für schnell hin und her verschiebbare elektrische Energie, bspw. auf kapazitiver Basis, und einen Teil für größere Mengen elektrischer Energie, bspw. auf elektrochemischer Basis, umfassen, weil die Anforderungen an die Batterie mit nur einem Teil schlecht zu erfüllen sind.

Grundsätzlich kann bei dem neuen Verfahren auch ein zusätzlicher Verbraucher vorgesehen werden, um zusätzliche negative Regelleistung über das Maß hinaus bereitzustellen, das mit dem Photovoltaikgenerator als in Umkehrrichtung betriebener Verbraucher realisiert werden kann. Ein derartiger, ausschließlich zum Vernichten elektrischer Energie, d. h. zu deren Umwandlung in Wärme, vorgesehener Verbraucher gehört aber nicht zu der normalerweise bevorzugten Ausführungsform der vorliegenden Erfindung.

Das Leistungsregelsignal ist bei dem neuen Verfahren nicht auf sehr niederfrequente Rundsteuersignale beschränkt, wie sie bislang eingesetzt werden, um Photovoltaikanlagen und andere in ein Wechselstromnetz einspeisende Energiequellen bei einem Überangebot von elektrischer Leistung in dem Wechselstromnetz abzuregeln. Das Leistungsregelsignal kann sich vielmehr mit eben der Frequenz ändern, mit der ein Netzbetreiber die in seinem Wechselstromnetz zur Verfügung stehende elektrische Leistung regeln will.

Das Leistungsregelsignal, in dessen Abhängigkeit elektrische Leistung bei dem erfindungsgemäßen Verfahren in beiden Richtungen über den Wechselrichter zwischen dem Photovoltaikgenerator und/oder dem Zwischenspeicher und dem Wechselstromnetz transferiert wird, kann von dem jeweiligen Netzbetreiber des Wechselstromnetzes direkt an die einzelne Photovoltaikanlage oder an allen an das Wechselstromnetz angeschlossenen Photovoltaikanlagen ausgesandt werden. Dabei kann die Übermittlung des Leistungsregelsignals drahtlos oder drahtgebunden erfolgen, beispielsweise über das Wechselstromnetz selbst, über das Telefonfestnetz, über ein Mobilfunknetz oder über das Internet.

Es ist auch möglich, das Leistungsregelsignal für die Photovoltaikanlage aus der Netzfrequenz des Wechselstromnetzes abzuleiten, was gleichbedeutend damit ist, dass die Netzfrequenz des Wechselstromnetzes als Leistungsregelsignal verwendet wird. So kann die Photovoltaikanlage bei niedriger Netzfrequenz des Wechselstromnetzes eine positive Regelleistung bis hin zur maximal von dem Photovoltaikgenerator erzeugbaren elektrische Leistung in das Wechselstromnetz einspeisen, während sie bei hoher Netzfrequenz des Wechselstromnetzes eine negative Regelleistung bereitstellt bis hin zur maximalen elektrischen Leistungsaufnahme in ihren Photovoltaikgenerator. Bei dazwischen liegenden Netzfrequenzen sind alle Zwischenzustände in Bezug auf die Einspeisung oder Aufnahme von elektrischer Leistung möglich. Hierbei können auch die thermischen Zeitkonstanten der beteiligten Komponenten (d. h. deren Erwärmungsrate bei Überlastung) ausgenutzt werden, was dazu führt auch kurzfristig teilweise erheblich größere Leistungen einstellen zu können, als es in einem thermisch eingeschwungenen Zustand der Fall ist.

Bei dem erfindungsgemäßen Verfahren ist es realistisch, elektrische Leistung bis zur Nennleistung des Photovoltaikgenerators von dem Wechselstromnetz in den Photovoltaikgenerator zu transferieren. Dies gilt zumindest dann, wenn keine oder nur eine geringe solare Einstrahlung auf den Photovoltaikgenerator einwirkt. Bei maximaler solarer Einstrahlung kann durch das Aufnehmen elektrischer Leistung die Temperatur der Photovoltaikmodule des Photovoltaikgenerators auf unzulässige Werte ansteigen, da auch die im normalen Betrieb des Photovoltaikgenerators erfolgende Umwandlung von Lichtleistung in elektrische Leistung statt Wärme entfällt. Zu diesen Zeitpunkten wird aber bereits durch das Abregeln einer Photovoltaikanlage eine negative Regelleistung in Höhe der Nennleistung des Photovoltaikgenerators bereitgestellt. So betrachtet kann eine Photovoltaikanlage, die nach dem erfindungsgemäßen Verfahren betrieben wird, ganz unabhängig von der aktuellen solaren Einstrahlung immer ihre Nennleistung als negative Regelleistung bereitstellen.

Um die Integrität des Photovoltaikgenerators durch das Transferieren von elektrischer Leistung aus dem Wechselstromnetz in den Photovoltaikgenerator nicht zu gefährden, kann darauf geachtet werden, dass die in den Photovoltaikgenerator transferierte elektrische Leistung einen Maximalwert einhält. Als dieser Maximalwert kann zum Beispiel die oben erwähnte Nennleistung des Photovoltaikgenerators verwendet werden. Alternativ oder zusätzlich kann ein in den Photovoltaikgenerator fließender Strom und/oder eine resultierende Temperatur des Photovoltaikgenerators auf das Einhalten eines Maximalwerts überwacht werden. Häufig sind an Wechselrichtern zum Einspeisen von elektrischer Leistung von Photovoltaikgeneratoren in ein Wechselstromnetz entsprechende Überwachungseinrichtungen bzw. Anschlüsse für Sensoren an den Photovoltaikgenerator sowieso vorgesehen.

Wenn dem Betreiber der Photovoltaikanlage auch die elektrische Leistung voll vergütet wird, die von dem Photovoltaikgenerator potentiell in das Wechselstromnetz eingespeist werden könnte, aber nicht eingespeist wird, weil eine Abregelung dieser Leistung erfolgt oder gar Leistung aus dem Wechselstromnetz aufgenommen wird, bedeutet die Bereitstellung vergüteter Regelleistung durch die Photovoltaikanlage in jedem Fall eine zusätzliche Einnahme für ihren Betreiber.

Es versteht sich, dass bei dem neuen Verfahren die Regelleistung aufgezeichnet werden muss, die in Abhängigkeit von dem Leistungsregelsignal zwischen dem Photovoltaikgenerator und dem Wechselstromnetz transferiert wird, um hierfür Vergütung verlangen zu können. Diese auf Anforderung erbrachte Regelleistung umfasst die negative Regelleistung, die in Abhängigkeit von dem Leistungsregelsignal über den Wechselrichter aus dem Wechselstromnetz aufgenommen wird. Es versteht sich, dass negative und positive Regelleistung nicht integrativ sondern getrennt erfasst werden. Die Erfassung kann hierbei auch eine Erfassung von Spitzenwerten der bereitgestellten Regelleistung innerhalb von Erfassungsintervallen sein.

Zum Zwecke ihrer Vergütung ist auch die elektrische Leistung aufzuzeichnen, die von dem Photovoltaikgenerator potentiell in das Wechselstromnetz eingespeist werden könnte, aber in Abhängigkeit von dem Leistungsregelsignal nicht eingespeist wird. Zumindest soweit es sich nicht um schnell schwankende Spitzenleistung handelt oder soweit sie nicht bereits mit der Regelleistung vergütet wird, ist es für diese Leistung unerheblich, warum sie nicht eingespeist wird. Die mögliche, aber nicht realisierte Einspeiseleistung ist von Interesse, wenn eine Abregelung auf eine geringere immer noch in das Wechselstromnetz eingespeiste elektrische Leistung erfolgt; und genauso ist sie von Interesse, wenn sogar elektrische Leistung aus dem Wechselstromnetz in den Photovoltaikgenerator abgeführt wird.

Um ein verlässliches Maß für die elektrische Leistung zu bestimmen, die unter den aktuellen Einstrahlungsbedingungen aus dem Photovoltaikgenerator in das Wechselstromnetz eingespeist werden könnte, aber aufgrund des Leistungsregelsignals nicht eingespeist wird, kann ein Teil, beispielsweise einer von mehreren Strings des Photovoltaikgenerators betrieben werden, um maximale elektrische Leistung zu generieren. Von dieser Leistung kann dann auf die mögliche Leistung des gesamten Photovoltaikgenerators extrapoliert werden. Je nachdem, welche Leistungsflussrichtung das Leistungsregelsignal aktuell anfordert, kann diese elektrische Leistung dann noch in das Wechselstromnetz eingespeist werden, oder sie muss zusätzlich in den anderen Teilen des Photovoltaikgenerators in Wärme umgewandelt werden. Hierdurch wird die thermische Belastung des Photovoltaikgenerators als Ganzes jedoch nicht erhöht. Auch die thermische Belastung der einzelnen Strings ändert sich nicht, wenn der String, der zur Generierung der maximalen elektrischen Leistung betrieben wird, durchgetauscht wird. Es versteht sich, dass der Wechselrichter einen speziellen Aufbau aufweisen muss, um mehrere Teile des Photovoltaikgenerators unterschiedlich betreiben zu können. Zumindest muss für jeden dieser Teile des Photovoltaikgenerators ein eigener, separat ansteuerbarer eingangsseitiger DC/DC-Wandler in dem Wechselrichter vorgesehen sein.

Eine weitere Möglichkeit zur Bestimmung der möglichen Leistung einer Photovoltaikanlage, die bei reduzierter Einspeiseleistung betrieben wird, besteht darin, den MPP durch kurzzeitiges Abfahren der Kennlinie zu ermitteln, und dies in regelmäßigen Zeitabständen zu wiederholen. Daraus resultierenden Leistungsschwankungen können, wenn die Kennlinie schnell abgefahren wird, auch ohne eine zusätzliche Batterie mit den in einem Wechselrichter regelmäßig vorhandenen Zwischenkreiskondensatoren gepuffert werden.

Der erfindungsgemäße Wechselrichter weist neben einer Steuerung zur Umsetzung des erfindungsgemäßen Verfahrens vorzugsweise einen Anschluss für eine Batterie mit einem bidirektionalen Batterieinverter auf. Eine Überwachungseinrichtung kann zur Überwachung der in den Photovoltaikgenerator transferierten elektrischen Leistung, eines dabei in den Photovoltaikgenerator fließenden Stroms und/oder einer resultierenden Temperatur des Photovoltaikgenerators vorgesehen sein. Zudem sind neben den üblichen Zählern für in das Wechselstromnetz eingespeiste elektrische Leistung und für möglicherweise aus dem Wechselstromnetz für den Betrieb des Wechselrichters bezogene elektrische Leistung möglichst zusätzliche Zähler für elektrische Leistung, die in Abhängigkeit von dem Leistungsregelsignal von der Steuerung zwischen dem Photovoltaikgenerator und dem Wechselstromnetz transferiert wird, also für die erbrachte Regelleistung, sinnvoller Weise getrennt nach positiver und negativer Regelleistung, und für elektrische Leistung vorgesehen, die von dem Photovoltaikgenerator potentiell in das Wechselstromnetz eingespeist werden könnte, aber in Abhängigkeit von dem Leistungsregelsignal nicht eingespeist wird.

Es versteht sich, dass der erfindungsgemäße Wechselrichter eine ausreichende maximale Leistung haben muss, um das erfindungsgemäße Verfahren umsetzen zu können. Insbesondere muss er in der Lage sein, neben einer elektrischen Leistung, die bereits bei Regelleistung von null in das Wechselstromnetz eingespeist wird, auch die vorgehaltene positive Regelleistung in das Wechselstromnetz zu transferieren, egal, ob sie aus dem Photovoltaikgenerator oder einer Batterie kommt. Hierbei kann ausgenutzt werden, dass der Wechselrichter für eine begrenzte Zeit einen Leistungswert in das Netz einspeisen kann, der erheblich über dem Grenzwert für dauerhafte Einspeisung liegen kann.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von allen erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein Prinzipschaubild einer ersten Ausführungsform der vorliegenden Erfindung, und
- **Fig. 2**: ist ein Prinzipschaubild einer zweiten Ausführungsform der vorliegenden Erfindung.

### FIGURENBESCHREIBUNG

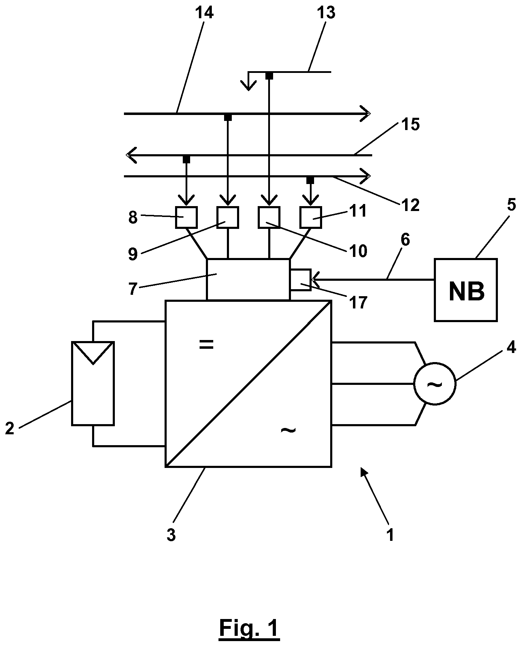

**Fig. 1** skizziert eine Photovoltaikanlage 1 mit einem Photovoltaikgenerator und einem Wechselrichter 3. Der Wechselrichter 3 ist primär dazu vorgesehen, elektrische Leistung von dem Photovoltaikgenerator 2 in ein angeschlossenes Wechselstromnetz 4 einzuspeisen. Um das Wechselstromnetz 4 bezüglich des Angebots an elektrischer Leistung zu stabilisieren, kann ein Netzbetreiber 5 über ein Leistungsregelsignal 6 auf eine Steuerung 7 des Wechselrichters 3 einwirken, um Regelleistung von dem Wechselrichter 3 in Anspruch zu nehmen. Negative Regelleistung wird dann, wenn der Wechselrichter 3 gerade elektrische Leistung in das Wechselstromnetz 4 einspeist, zunächst dadurch realisiert, dass diese elektrische Leistung reduziert, d.h. abgeregelt wird. Darüber hinaus kann der Wechselrichter 3 von der Steuerung 7 auch so angesteuert werden, dass elektrische Leistung aus dem Wechselstromnetz 4 in den Photovoltaikgenerator 2 transferiert und dort in Wärme umgewandelt wird. Diese transferierbare Leistung ist bei starker solarer Einstrahlung auf den Photovoltaikgenerator 2 unter Umständen beschränkt. In jedem Fall steht aber mit der Photovoltaikanlage 1 bezogen auf ihren nicht abgeregelten Betrieb eine negative Regelleistung in Höhe der Nennleistung des Photovoltaikgenerators 2 zur Verfügung. Bereits für das Bereistellen solcher negativer Regelleistung kann der Betreiber der Photovoltaikanlage 1 von dem Netzbetreiber 5 eine Vergütung verlangen. In jedem Fall kann er eine Vergütung für tatsächlich in Anspruch genommene negative Regelleistung fordern. Zusätzliche positive Regelleistung wird von dem Wechselrichter 3 dadurch bereitgestellt, dass er den Photovoltaikgenerator 2 bei einer Regelleistung von null in einem in Bezug auf die Leistung unterhalb seines MPP liegenden Arbeitspunkts betreibt. Diese Leistungsreduktion steht damit als positive Regelleistung zur Verfügung.

In dem Beispiel gemäß Fig. 1 sind insgesamt vier Zähler 8 bis 11 dargestellt, die an die Photovoltaikanlage 1 angeschlossen sind und verschiedene Leistungen zählen, d. h. über die Zeit integrieren, um so die Grundlage für eine Vergütung der jeweiligen Leistungen zu erfassen. Die Leistungsflussrichtung ist hierbei in Form von Pfeilen im oberen Teil der Fig. 1 dargestellt, wobei ein Pfeil von links nach rechts einen Leistungsfluss vom Photovoltaikgenerator 2 in das Wechselstromnetz 4 kennzeichnet. Zähler 11 erfasst die von dem Photovoltaikgenerator 2 in das Wechselstromnetz 4 regulär eingespeiste elektrische Leistung 12. Der Zähler 10 erfasst die elektrische Leistung 13, die von dem Wechselrichter 3 aus dem Wechselstromnetz 4 aufgenommen wird, um beispielsweise seine Steuerung 7 mit elektrischer Energie zu versorgen, wenn diese von dem Photovoltaikgenerator 2 des Nachts nicht zur Verfügung steht. Der Zähler 9 dient zum Erfassen in Anspruch genommener positiver Regelleistung 14, die auf Anforderung durch das Leistungsregelsignal 6 in das Wechselstromnetz 4 eingespeist wird. Der Zähler 8 erfasst umgekehrt die negative Regelleistung 15, die von dem Wechselstromnetz 4 zu dessen Stabilisierung in den Photovoltaikgenerator 2 transferiert wird, d. h. die tatsächlich in Anspruch genommene negative Regelleistung 15 der Photovoltaikanlage 1. Daneben kann auch noch ein hier nicht dargestellter Zähler für die elektrische Leistung vorgesehen sein, die potentiell von dem Photovoltaikgenerator verfügbar wäre, die aber aufgrund des aktuellen Werts des Leistungsregelsignals 6 nicht eingespeist wird. Diese elektrische Leistung 14 wird dem Netzbetreiber der Photovoltaikanlage 1 zumindest in Deutschland genauso vergütet wie elektrische Leistung 12, die tatsächlich in das Wechselstromnetz 4 eingespeist wird.

Selbstverständlich ist eine Erfassung der in Anspruch genommenen positiven und negativen Regelleistung mit einem gemeinsamen Zähler ebenso denkbar, zum Beispiel durch lediglich betragsmäßige Erfassung der Regelleistung.

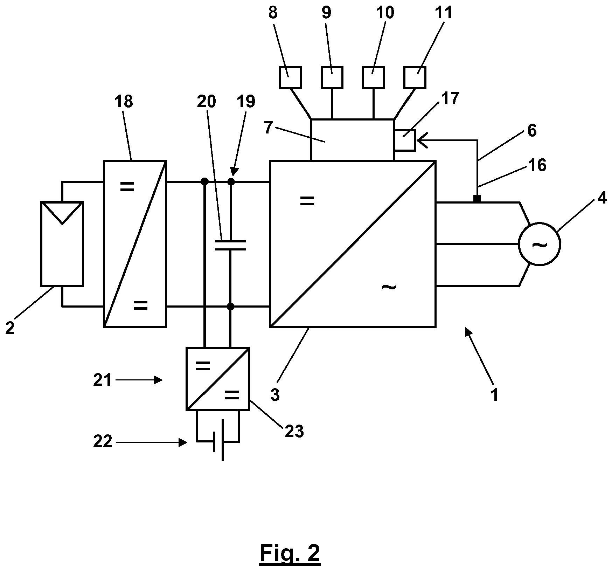

In **Fig. 2** sind dieselben Zähler 8 bis 11 wie in Fig. 1 vorgesehen, auch wenn hier die von ihnen erfassten Leistungen 12 bis 15 nicht durch Richtungspfeile angedeutet sind. Ein Unterschied bei der Photovoltaikanlage 1 gemäß Fig. 2 gegenüber derjenigen gemäß Fig. 1 besteht darin, dass die Steuerung 7 über ihren Empfänger 17 kein separat von einem Netzbetreiber übermitteltes Leistungsregelsignal empfängt, sondern ein Leistungsregelsignal 6 in Form der Netzfrequenz 16 des Wechselstromnetzes 4, die durch den Spannungsverlauf an einer der Anschlussleitungen des Wechselrichters 3 an das Wechselstromnetz 4 erfasst wird. Abhängig von dieser Netzfrequenz legt die Steuerung 7 die Regelleistung fest, die mit der Photovoltaikanlage 1 aktuell bereitgestellt wird. Die negative Regelleistung realisiert sie je nach aktueller solarer Einstrahlung auf den Photovoltaikgenerator 2 durch Abregeln der in das Wechselstromnetz 4 eingespeisten elektrischen Leistung und/oder durch Aufnahme von elektrischer Leistung aus dem Wechselstromnetz in ihren Photovoltaikgenerator 2.

Außerdem ist bei dem Wechselrichter 1 gemäß Fig. 2 neben dem Photovoltaikgenerator 2, der über einen DC/DC-Wandler 18 an einen eingangsseitigen Gleichspannungszwischenkreis 19 mit einer Zwischenkreiskapazität 20 des Wechselrichters 3 angeschlossen ist, auch ein Anschluss 21 für eine Batterie 22 an den Gleichspannungszwischenkreis 19 vorgesehen. In diesem Anschluss 21 ist ein bidirektionaler DC/DC-Wandler als Batterieinverter 23 angeordnet. Mit Hilfe der Batterie 23 kann über den Wechselrichter 3 positive Regelleistung für das Wechselstromnetz 4 bereitgestellt werden, und dies bei entsprechender Dimensionierung des Wechselrichters unabhängig von der Einspeisung von elektrischer Leistung von dem Photovoltaikgenerator 2 in das Wechselstromnetz 4. Diese elektrische Leistung von dem Photovoltaikgenerator 2 ist als positive Regelleistung für das Wechselstromnetz 4 weniger gut geeignet, weil sie von der Einstrahlung auf den Photovoltaikgenerator 2 abhängt und damit des Nachts gar nicht zur Verfügung steht. Bei der Photovoltaikanlage 1 gemäß Fig. 2 kann jedoch die Batterie 22 mit elektrischer Leistung aus dem Photovoltaikgenerator 2 oder ggf. auch unter Aufnahme von elektrischer Leistung aus dem Wechselstromnetz 4 aufgeladen und auch aufgeladen gehalten werden, bis positive Regelleistung benötigt wird. Dann wird die in der Batterie 22 zwischengespeicherte elektrische Leistung über den Batterieinverter 23 und den Wechselrichter 3 in das Wechselstromnetz 4 eingespeist.

### BEZUGSZEICHENLISTE

- 1: Photovoltaikanlage
- 2: Photovoltaikgenerator
- 3: Wechselrichter
- 4: Wechselstromnetz
- 5: Netzbetreiber
- 6: Leistungsregelsignal
- 7: Steuerung
- 8: Zähler
- 9: Zähler
- 10: Zähler
- 11: Zähler
- 12: Leistung
- 13: Leistung
- 14: positive Regelleistung
- 15: negative Regelleistung
- 16: Netzfrequenz
- 17: Empfänger
- 18: DC/DC-Wandler
- 19: Gleichspannungszwischenkreis
- 20: Zwischenkreiskapazität
- 21: Anschluss
- 22: Batterie
- 23: Batterieinverter

## Patentansprüche

1. Verfahren zum Steuern einer an ein Wechselstromnetz (4) angeschlossenen Photovoltaikanlage (1) mit einem Photovoltaikgenerator (2) und mit einem Wechselrichter (3),
- wobei ein Leistungsregelsignal (6) zur Stabilisierung des Wechselstromnetzes (4) empfangen und
- wobei mit dem Wechselrichter (3) in Abhängigkeit von dem Leistungsregelsignal (6) elektrische Leistung (12, 14, 15) zwischen dem Photovoltaikgenerator (2) und dem Wechselstromnetz (4) transferiert wird, die positive und negative dynamische Regelleistung (14, 15) umfasst, wobei
- die elektrische Leistung (12, 14, 15) in Abhängigkeit von dem Leistungsregelsignal (6) in beiden Richtungen zwischen dem Wechselrichter (3) und dem Wechselstromnetz (4) transferiert wird und
- die elektrische Leistung (12, 14, 15) in Abhängigkeit von dem Leistungsregelsignal (6) in beiden Richtungen zwischen dem Photovoltaikgenerator (2) und dem Wechselstromnetz (4) transferiert wird, wobei aus dem Wechselstromnetz (4) in den Photovoltaikgenerator (2) transferierte elektrische Leistung dort in Wärme umgewandelt wird.

2. Verfahren nach Anspruch 1 **dadurch gekennzeichnet, dass** der Photovoltaikgenerator (2) bei Regelleistung null in einem Arbeitspunkt betrieben wird, in dem er eine gegenüber seinem MPP reduzierte elektrische Leistung abgibt.

3. Verfahren nach Anspruch 2, **dadurch gekennzeichnet, dass** die reduzierte elektrische Leistung um einen vorgegebenen absoluten Betrag oder einen vorgegebenen prozentualen Anteil gegenüber der elektrischen Leistung am MPP reduziert ist.

4. Verfahren nach einem der vorhergehenden Ansprüche, **dadurch gekennzeichnet, dass** die elektrische Leistung (12, 14, 15) in Abhängigkeit von dem Leistungsregelsignal (6) weiterhin von und zu einem Zwischenspeicher für elektrische Leistung (12, 14, 15) transferiert wird.

5. Verfahren nach einem der vorhergehenden Ansprüche, **dadurch gekennzeichnet, dass** das Leistungsregelsignal (6) drahtlos oder drahtgebunden, insbesondere über das Wechselstromnetz (4), über das Telefonfestnetz, über ein Mobilfunknetz und/oder über das Internet, von einem Netzbetreiber (5) des Wechselstromnetzes (4) übermittelt wird.

6. Verfahren nach einem der vorhergehenden Ansprüche, **dadurch gekennzeichnet, dass** das Leistungsregelsignal (6) über die Netzfrequenz (5) des Wechselstromnetzes (4) übermittelt wird.

7. Verfahren nach einem der vorhergehenden Ansprüche, **dadurch gekennzeichnet, dass** elektrische Leistung (15) bis zur Nennleistung des Photovoltaikgenerators (2) von dem Wechselstromnetz (4) in den Photovoltaikgenerator (2) transferiert wird.

8. Verfahren nach einem der vorhergehenden Ansprüche, **dadurch gekennzeichnet, dass**
- die in den Photovoltaikgenerator (2) transferierte elektrische Leistung (15),
- ein dabei in den Photovoltaikgenerator (2) fließender Strom und/oder
- eine resultierende Temperatur des Photovoltaikgenerators (2)
auf das Einhalten eines Maximalwerts überwacht wird.

9. Verfahren nach einem der vorhergehenden Ansprüche, **dadurch gekennzeichnet, dass** die Regelleistung (14, 15) aufgezeichnet wird, die in Abhängigkeit von dem Leistungsregelsignal (6) zwischen dem Photovoltaikgenerator (2) und dem Wechselstromnetz (4) transferiert wird.

10. Verfahren nach einem der vorhergehenden Ansprüche, **dadurch gekennzeichnet, dass** die elektrische Leistung aufgezeichnet wird, die von dem Photovoltaikgenerator (2) potentiell in das Wechselstromnetz (4) eingespeist werden könnte, aber in Abhängigkeit von dem Leistungsregelsignal (6) nicht eingespeist wird.

11. Wechselrichter (3) zur Einspeisung elektrischer Energie von einem Photovoltaikgenerator (2) in ein Wechselstromnetz (3) mit einem Empfänger für ein Leistungsregelsignal und mit einer Steuerung (7), die so ausgebildet ist, dass sie im Betrieb des Wechselrichters (3) gemäß dem Verfahren nach einem der vorhergehenden Ansprüche in Abhängigkeit von dem Leistungsregelsignal (6) mit dem Photovoltaikgenerator (2) positive und negative dynamische Regelleistung (14, 15) für das Wechselstromnetz (4) bereitstellt.

12. Wechselrichter (3) nach Anspruch 11, **dadurch gekennzeichnet, dass** ein Anschluss (21) für eine Batterie (22) als Zwischenspeicher für elektrische Leistung (12, 15) vorgesehen ist.

13. Wechselrichter (3) nach Anspruch 11 oder 12, **dadurch gekennzeichnet, dass** eine Überwachungseinrichtung zur Überwachung
- der in den Photovoltaikgenerator (2) transferierten elektrischen Leistung (15),
- eines dabei in den Photovoltaikgenerator (2) fließenden Stroms und/oder
- einer resultierenden Temperatur des Photovoltaikgenerators (2)
vorgesehen ist.

14. Wechselrichter (3) nach einem der Ansprüche 11 bis 13, **dadurch gekennzeichnet, dass** ein Zähler (8) für die Regelleistung (14, 15) vorgesehen ist, die in Abhängigkeit von dem Leistungsregelsignal (6) von der Steuerung (7) zwischen dem Photovoltaikgenerator (2) und dem Wechselstromnetz (4) transferiert wird.

15. Wechselrichter (3) nach einem der Ansprüche 11 bis 14, **dadurch gekennzeichnet, dass** ein Zähler (9) für elektrische Leistung vorgesehen ist, die von dem Photovoltaikgenerator (2) potentiell in das Wechselstromnetz (4) eingespeist werden könnte, aber in Abhängigkeit von dem Leistungsregelsignal (6) nicht eingespeist wird.

## Claims

1. Method for controlling a photovoltaic system (1) connected to an AC grid (4)and comprising a photovoltaic generator (2) and an inverter (3),
- wherein a power control signal (6) for stabilizing the AC grid (4) is received and
- wherein, by means of the inverter (3), as a function of the power control signal (6), electrical power (12, 14, 15) is transferred between the photovoltaic generator (2) and the AC grid (4), said electrical power comprising positive and negative dynamic control power (14, 15),
wherein
- the electrical power (12, 14, 15) is transferred between the inverter (3) and the AC grid (4) in both directions as a function of the power control signal (6), and
- the electrical power (12, 14, 15) is transferred between the photovoltaic generator (2) and the AC grid (4) in both directions as a function of the power control signal (6),
wherein electrical power transferred from the AC grid (4) into the photovoltaic generator (2) is dissipated into heat there.

2. Method according to Claim 1, **characterized in that**, in the case of a control power of zero, the photovoltaic generator (2) is operated in an operating pointin which it supplies an electric power reduced with regard to its MPP.

3. Method according to Claim 2, **characterized in that** the reduced electrical power is reduced by a predetermined absolute value or a predetermined percentage proportion with regard to the electrical power at the MPP.

4. Method according to any of the preceding claims, **characterized in that** the electrical power (12, 14, 15) is furthermore transferred from and to an intermediate storage for electrical power (12, 14, 15) as a function of the power control signal (6).

5. Method according to any of the preceding claims, **characterized in that** the power control signal (6) is transmitted wirelessly or by wire, in particular via the AC grid (4), via
a fixed line telephone network, via a mobile radio network and/or via the Internet, by an operator (5) of the AC grid (4).

6. Method according to any of the preceding claims, **characterized in that** the power control signal (6) is communicated via the grid frequency (5) of the AC grid (4).

7. Method according to any of the preceding claims, **characterized in that** electrical power (15) up to the nominal power of the photovoltaic generator (2) is transferred from the AC grid (4) into the photovoltaic generator (2).

8. Method according to any of the preceding claims, **characterized in that**
- the electrical power (15) transferred into the photovoltaic generator (2)
- a current flowing into the photovoltaic generator (2) in the process and/or
- a resulting temperature of the photovoltaic generator (2)
are/is monitored for compliance with a maximum value.

9. Method according to any of the preceding claims, **characterized in that** the control power (14, 15) is recorded which is transferred between the photovoltaic generator (2) and the AC grid (4) as a function of the power control signal (6).

10. Method according to any of the preceding claims, **characterized in that** the electrical power is recorded which could potentially be fed from the photovoltaic generator (2) into the AC grid (4) but which, as a function of the power control signal (6), is not fed in.

11. Inverter (3) for feeding electrical energy from a photovoltaic generator (2) into an AC grid (3) with a receiver for a power control signal and with a controller (7) configured such that it provides positive and negative dynamic control power (14, 15) for the AC grid (4) during the operation of the inverter (3) in accordance with the method according to any of the preceding claims depending on the power control signal (6) with the photovoltaic generator (2).

12. Inverter (3) according to Claim 11 **characterized in that** provision is made of a terminal (21) for a battery (22) as an intermediate storage for electrical power (12, 15).

13. Inverter (3) according to Claim 11 or 12, **characterized in that** a monitoring device for monitoring
- the electrical power (15) transferred into the photovoltaic generator (2),
- a resulting current flowing into the photovoltaic generator (2) and/or
- a resulting temperature of the photovoltaic generator (2)
is provided.

14. Inverter (3) according to any of Claims 11 to 13, **characterized in that** provision is made of a meter (8) for the control power (14, 15) which is transferred between the photovoltaic generator (2) and the AC grid (4) by the controller (7) as a function of the power control signal (6).

15. Inverter (3) according to any of Claims 11 to 14, **characterized in that** provision is made of a meter (9) for electrical power which could potentially be fed into the AC grid (4) from the photovoltaic generator (2), but which, as a function of the power control signal (6), is not fed in .

## Revendications

1. Procédé pour commander un système photovoltaïque (1) raccordé à un réseau de courant alternatif (4) et comportant un générateur photovoltaïque (2) et comportant un onduleur (3),
- dans lequel un signal de régulation de puissance (6) destiné à stabiliser le réseau de courant alternatif (4) est reçu et
- dans lequel, au moyen de l'onduleur (3) et en fonction du signal de régulation de puissance (6), une puissance électrique (12, 14, 15) est transférée entre le générateur photovoltaïque (2) et le réseau de courant alternatif (4), laquelle puissance électrique comprend une puissance de régulation dynamique positive et négative (14, 15), dans lequel
- la puissance électrique (12, 14, 15) est transférée dans les deux directions entre l'onduleur (3) et le réseau de courant alternatif (4) en fonction du signal de régulation de puissance (6) et
- la puissance électrique (12, 14, 15) est transférée dans les deux directions entre le générateur photovoltaïque (2) et le réseau de courant alternatif (4) en fonction du signal de régulation de puissance (6), dans lequel la puissance électrique transférée depuis le réseau de courant alternatif (4) vers le générateur photovoltaïque (2) est convertie dans celui-ci en chaleur.

2. Procédé selon la revendication 1, **caractérisé en ce que** le générateur photovoltaïque (2), lorsque la puissance de régulation est zéro, est mis en fonctionnement en un point de fonctionnement pour lequel il délivre une puissance électrique réduite par rapport à son MPP (point de puissance maximale).

3. Procédé selon la revendication 2, **caractérisé en ce que** la puissance électrique réduite est réduite d'une valeur absolue prédéterminée ou d'une proportion en pourcentage prédéterminée par rapport à la puissance électrique au MPP.

4. Procédé selon l'une quelconque des revendications précédentes, **caractérisé en ce que** la puissance électrique (12, 14, 15) est en outre transférée en fonction du signal de régulation de puissance (6) depuis et vers un accumulateur intermédiaire destiné à la puissance électrique (12, 14, 15).

5. Procédé selon l'une quelconque des revendications précédentes, **caractérisé en ce que** le signal de régulation de puissance (6) est transmis par liaison sans fil ou par liaison par fil, notamment par l'intermédiaire du réseau de courant alternatif (4), par l'intermédiaire du réseau téléphonique fixe, par l'intermédiaire d'un réseau de téléphonie mobile et/ou par l'intermédiaire de l'Internet, par un opérateur réseau (5) du réseau de courant alternatif (4).

6. Procédé selon l'une quelconque des revendications précédentes, **caractérisé en ce que** le signal de régulation de puissance (6) est transmis sur la fréquence du secteur (5) du réseau de courant alternatif (4).

7. Procédé selon l'une quelconque des revendications précédentes, **caractérisé en ce qu'**une puissance électrique (15) est transférée jusqu'à la puissance nominale du générateur photovoltaïque (2) depuis le réseau de courant alternatif (4) vers le générateur photovoltaïque (2).

8. Procédé selon l'une quelconque des revendications précédentes, **caractérisé en ce que**
- la puissance électrique (15) transférée vers le générateur photovoltaïque (2),
- un courant passant ainsi dans le générateur photovoltaïque (2) et/ou
- une température qui en résulte du générateur photovoltaïque (2)
est/sont surveillé/s en ce qui concerne le respect d'une valeur maximale.

9. Procédé selon l'une quelconque des revendications précédentes, **caractérisé en ce qu'**on enregistre la puissance de régulation (14, 15) qui est transférée en fonction du signal de régulation de puissance (6) entre le générateur photovoltaïque (2) et le réseau de courant alternatif (4).

10. Procédé selon l'une quelconque des revendications précédentes, **caractérisé en ce qu'**on enregistre la puissance électrique qui aurait pu le cas échéant être injectée par le générateur photovoltaïque (2) dans le réseau de courant alternatif (4), mais qui n'est pas injectée en fonction du signal de régulation de puissance (6).

11. Onduleur (3) destiné à injecter de l'énergie électrique depuis un générateur photovoltaïque (2) dans un réseau de courant alternatif (3) comportant un récepteur destiné à un signal de régulation de puissance et comportant une unité de commande (7) qui est réalisée de manière à ce qu'elle fournisse, lors du fonctionnement de l'onduleur (3) conformément au procédé selon l'une quelconque des revendications précédentes, en fonction du signal de régulation de puissance (6), au moyen du générateur photovoltaïque (2), une puissance de régulation dynamique positive et négative (14, 15) destinée au réseau de courant alternatif (4).

12. Onduleur (3) selon la revendication 11, **caractérisé en ce qu'**il est prévu une borne (21) destinée à une batterie (22) en tant qu'accumulateur intermédiaire destiné à la puissance électrique (12, 15) .

13. Onduleur (3) selon la revendication 11 ou 12, **caractérisé en ce qu'**il est prévu un dispositif de surveillance destiné à surveiller
- la puissance électrique (15) transférée vers le générateur photovoltaïque (2),
- un courant passant ainsi dans le générateur photovoltaïque (2) et/ou
- une température qui en résulte du générateur photovoltaïque (2).

14. Onduleur (3) selon l'une quelconque des revendications 11 à 13, **caractérisé en ce qu'**il est prévu un compteur (8) de la puissance de régulation (14, 15) qui est transférée en fonction du signal de régulation de puissance (6) par l'unité de commande (7) entre le générateur photovoltaïque (2) et le réseau de courant alternatif (4).

15. Onduleur (3) selon l'une quelconque des revendications 11 à 14, **caractérisé en ce qu'**il est prévu un compteur (9) de la puissance électrique qui aurait pu le cas échéant être injectée par le générateur photovoltaïque (2) dans le réseau de courant alternatif (4), mais qui n'est pas injectée en fonction du signal de régulation de puissance (6).
